# EUROPEAN PATENT SPECIFICATION

(11) **EP 3 147 500 B1**
(45) Date of publication and mention of the grant of the patent: **07.11.2018**
(21) Application number: 15795631.9
(22) Date of filing: 10.05.2015
(51) Int. Cl.: F03D 3/00, F03D 7/06, F03D 5/04

(54) **VERTICAL AXIS WIND MACHINE HAVING CONTROLLABLE OUTPUT POWER**
SENKRECHTE ACHSWINDMASCHINE MIT STEUERBARER AUSGANGSLEISTUNG
ÉOLIENNE À AXE VERTICAL ET À PUISSANCE DE SORTIE RÉGULABLE

(30) Priority: 19.05.2014 CN 201410210866
(43) Date of publication of application: 29.03.2017
(73) Proprietor: Qin, Minghui, Ningde, Fujian 352100 (CN)
(72) Inventor: Qin, Minghui, Ningde, Fujian 352100 (CN)
(74) Representative: 2K Patentanwälte Blasberg Kewitz & Reichel
(86) International application number: PCT/CN2015/078633
(87) International publication number: WO 2015/176611

(56) References cited:
- EP-A1- 2 492 498
- CA-C- 2 644 942
- CN-A- 102 943 746
- CN-A- 104 373 289
- CN-U- 202 091 114
- CN-U- 202 468 158

## Description

### Technical field

The invention relates to a vertical axis wind turbine with controllable output power, and belongs to the technical field of wind power generation.

### Description of the Related Art

China is rich in wind energy resources. According to the preliminary calculation of Chinese Academy of Meteorological Sciences, the recoverable reserves of wind energy at a land elevation of 10m is 253 GW in China. More than hundreds GW of electric energy with stable installed power could be developed in China. if wind power in a ground torrential zone at the ground boundary layer in some place would be developed for wind power generation by using the technology of this invention, which is enough to replace coal energy used currently in China.

Wind energy is now mainly used for wind power generation. The advantages of wind power generation: (1) the cost of building a wind farm is low, which is much lower than the cost of building a hydropower plant, a thermal power plant or a nuclear power plant; (2) as a clean natural energy source, wind power produces no environmental pollution problems associated with coal power, oil power and nuclear power; (3) apart from routine maintenance, wind power dispenses with any other fuel consumption necessary for coal power, oil power and nuclear power, thus the operation cost is low; (4) wind is a renewable and pollution-free energy with huge reserves; and (5) the most important thing is that a ground torrential zone at the ground boundary layer exists in some places worldwide, and the existence of qualified wind power capable for power generation at anytime of all the seasons in each year, therefore, electric energy generated by the wind power in such places can directly replace fossil energy mainly used today completely if this kind of wind power is properly used.

Along with global warming and energy crisis, countries all over the world are stepping up the development and utilization of wind power to minimize the emission of carbon dioxide and other greenhouse gases, and protect the Earth on which we live. However, electric energy generated by wind power generation devices mainly used in the world today is not fit for main power supply of the main power grids of all countries due to its own quality problems, therefore the invention is of particular importance.

The core of wind power generation is wind turbines that are wind energy collecting devices and can be divided into two categories, i.e., horizontal axis type and vertical axis type. Large-scale wind power generation systems currently mainly adapt horizontal axis wind energy collecting devices. But horizontal axis wind turbines must collect energy in way of windward, thus the wind energy utilization space is basically limited to decade meters latitude of space but below 100m above the ground. In addition, the continuous and stable power output cannot be supplied, and the installed power per unit and total installed power of wind power generation are very limited. For example, the annular power generation capacity of more than 3000 wind power generators installed in Denmark is only 10 billion kWh, and the mean effective generation power of a single wind power generator is only 380kW. Nevertheless, according to a rough estimation, the total wind power available recently is about 1 to 10 billion kWh solely at said ground boundary layer, this value is 10 times larger than that of water resources available in the world. If wind power at hundreds of meters or even 1 kilometer above the ground can be used, especially the if high quality wind resources in the ground torrential zone at the ground boundary layer in some places on the earth can be utilized, wind supposed to directly supply the electric power for fulfilling demand all over the world.

Currently, vertical axis wind turbines alternatively used also have the same problems as the mainly used horizontal axis wind turbines, namely such as less energy collected , lower efficiency and unstable power output. The vertical axis wind turbine with controllable output power of the invention has no windward side problem and can collect energy from different wind directions on different horizontal planes. The most important thing is that angles of attack and lift direction of the blades installed on the wind turbine can be automatically controlled by the controllable device via the computer based on the need of power grid according to momentary wind force on the blades. All blades of the wind turbine only do negative work at one or two positions where the wind direction is consistent with ring tangent, and can do positive work or negative work on the wind turbine as needed at other positions, extremely improving the power generation efficiency of the wind.

An example of a prior art wind energy converter can be found in EP2492498A1.

### Technical Problem

The purpose of the invention is to overcome above mentioned disadvantages like less energy collected, lower efficiency and unstable power output of existing wind power generation technology, and to provide a vertical axis wind turbine with controllable output power, mainly utilizing the given feature of qualified wind capable for power generation where a ground torrential zone at the ground boundary layer in some place over the world exists at any time of four seasons in each year. The vertical axis wind turbine depends on the special design that angles of attack and lift direction of the blades installed on the wind turbine can be automatically controlled via the computer according to momentary wind force on the blades, all blades of the wind turbine only do negative work at one or two positions where the wind direction is consistent with ring tangent, and can do positive work or negative work on the wind turbine as needed at other positions, so that a single wind turbine can collect the wind energy within a radius of hundreds of meters and even kilometers and stably provide the similar millions of kilowatts of high quality electric energy with stable AC frequency and automatically controlled output power as current thermal power generation units based on the need of power grid load.

### Problem to be solved

In order to achieve the purpose, the technical solution of the invention is to provide a vertical axis wind turbine with controllable output power, comprising a wind turbine base, and an integrated shaftless annular three dimensional framework in rigid connection with an annular floater to support blades, wherein blades are installed on the three dimensional framework. The vertical axis wind turbine is characterized in that the wind turbine base is provided with an annular groove with water; the annular floater in rigid connection with the three dimensional framework is a bottom structure of a rotator of the wind turbine, and the shape of the annular floater is in movable fit with an inner cavity of the annular groove; the blades of the wind turbine are of a double-sided lift type and of airfoil profile like those of airplane wing , and the front edges thereof are normally in the windward direction, and the rear edges are in the downwind direction; the annular groove on the base is loaded with water, the lower part of the rotator goes deep into the water, and the upper part thereof floats on the water playing a role as a bearer for output of energy; angles of attack and lift direction of the blades installed on the wind turbine can be automatically controlled by the controllable device via the computer according to momentary wind force on the blades; all blades of the wind turbine only do negative work at one or two positions where the wind direction is consistent with ring tangent, and can do positive work or negative work on the wind turbine as needed at other positions. If such vertical axis wind turbines with controllable output power are reasonably arranged in some areas at mid-high latitude of the earth where a ground torrential zone at the ground boundary layer exists, power generator units driven by a single wind turbine can stably provide the similar millions of kilowatts of high quality electric energy with stable AC frequency and automatically controlled output power as current thermal power generator units based on the need of power grid load.

### Positive Effects

The positive effects of the invention are as follows: an annular rotator is of an integrated shaftless annular three dimensional framework, in the structural design of semi-floating the annular rotator in the groove on the base, both the motion resistance and frictional resistance of the rotator are very small, reducing reactive power consumption; the blades of the wind turbine are of the lift-type blades and of airfoil profile like those of airplane wing, and the front edges thereof are normally in the windward direction, and the rear edges are in the downwind direction; angles of attack and lift direction of the blades installed on the wind turbine can be automatically controlled by the controllable device via the computer according to momentary wind force on the blades; all blades of the wind turbine only do negative work at one or two positions where the wind direction is consistent with ring tangent, and can do positive work or negative work on the wind turbine as needed at other positions. If such vertical axis wind turbines with controllable output power are reasonably arranged in some areas at mid-high latitude of the earth where a ground torrential zone at the ground boundary layer exists, to collect the wind energy from ground and latitude both within a radius or a distance of hundreds of meters to kilometers. Therefore the power generation units driven by a single wind turbine can stably provide the similar millions of kilowatts of high quality electric energy with stable AC frequency and automatically controlled output power as current thermal power generation units based on the need of power grid load.

### Brief Description of the Drawings

The invention will be further described in combination with accompanying drawings and embodiments.

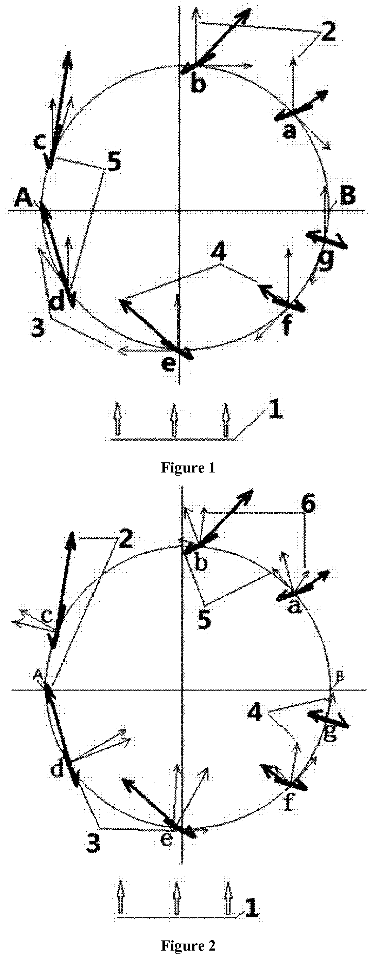

Figure 1 is a schematic diagram as an example showing the configuration of actual complex relative wind resulting from natural wind at exemplary points "a" through "g" and tangential relative wind generated from rotation of the wind turbine at different positions and interconnection with computer-controlled blades of the wind turbine in this invention.
   In Figure 1, 1-schematic diagram of natural wind; 2-natural wind at exemplary points "a" and "b" of the wind turbine; 3-tangential relative wind generated from rotation of the wind turbine at exemplary points c and d of the wind turbine; 4-actual complex relative wind resulting from natural wind and tangential relative wind generated from rotation of the wind turbine at exemplary points e and f; 5-schematic diagram of blade status of the wind turbine at exemplary points c and d, the lift direction of the blades at position c is at the right side of the windward direction of the blades, and the lift direction of the blades at position d is at the left side of the windward direction of the blades; points A and B are tangent points of natural wind at the rotator of the wind turbine, the lift direction of the blades at windward semi-circle on the AB line is at the left side of the windward direction of the blades, and the lift direction of the blades at downwind semi-circle on the AB line is at the right side of the windward direction of the blades.
Figure 2 is a schematic diagram of lift force formed by actual complex relative wind at exemplary points "a" through "g" on the blades as well as tangential component force and normal component force thereof at corresponding positions of the rotator of the wind turbine.;
   In Figure 2, 1-schematic diagram of natural wind; 2-actual complex relative wind resulting from natural wind at exemplary points "c" and "d" and tangential relative wind generated from rotation of the wind turbine; 3-schematic diagram of blade status of the wind turbine at exemplary points "d" and "e", the lift direction of the blades is at the left side of the windward direction of the blades; 4-schematic diagram of lift force formed by actual complex relative wind resulting from natural wind at exemplary points "f' and "g" and tangential relative wind generated from rotation of the wind turbine on the blades of the wind turbine, the lift direction of the blades is at the left side of the windward direction of the blades; 5-schematic diagram of tangential component force of the lift force formed by actual complex relative wind resulting from natural wind at exemplary points "a" and "b" and tangential relative wind generated from rotation of the wind turbine on the blades of the wind turbine; 6-schematic diagram of normal component force of the lift force formed by actual complex relative wind resulting from natural wind at exemplary points "a" and "b" and tangential relative wind generated from rotation of the wind turbine on the blades of the wind turbine; points A and B are tangent points of natural wind at the rotator of the wind turbine, the lift direction of the blades at windward semi-circle on the AB line is at the left side of the windward direction of the blades, and the lift direction of the blades at downwind semi-circle on the AB line is at the right side of the windward direction of the blades.

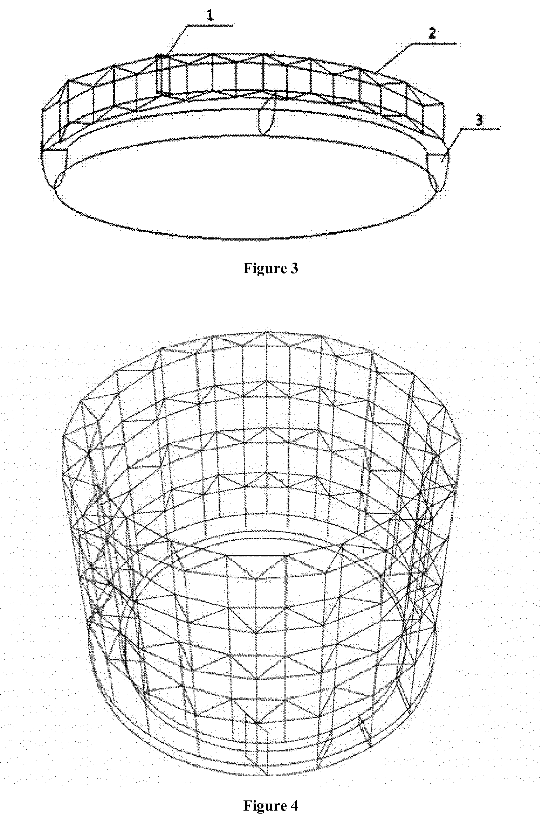

Figure 3 and Figure 4 are schematic diagrams of some substances of the invention. In Figure 3, 1-schematic diagram of installed blades of the wind turbine; 2-schematic diagram of the support structure of the installed blades; 3-cross sectional view of the floater. Figure 4 is a schematic diagram of the integrated shaftless annular three dimensional framework in rigid connection with an annular floater to support blades and the bottom structure of the annular floater,

### Description of the Preferred Embodiment

The structural principle of the invention is shown in Figure 1, Figure 2 and Figure 3. As shown in the figures, a vertical axis wind turbine with controllable output power comprises a wind turbine base, and a three dimensional framework (more than one layer) in rigid connection with an annular floater to support blades. The schematic diagram of some substances is shown in Figure 3, the blades are installed on the three-dimensional framework, as shown at the support of the wind blades in Figure 3. The wind turbine is characterized in that the wind turbine base is provided with an annular groove with water; the annular floater is in rigid connection with the three dimensional framework, as shown at cross section of the floater in Figure 3, it is a bottom structure of a rotator of the wind turbine, and the shape of the annular floater is in movable fit with an inner cavity of the annular groove with water; the blades of the wind turbine are of a double-sided lift type and installed on the three-dimensional framework in rigid connection with the annular floater, the blades are of airfoil profile like those of airplane wing, and the front edges thereof are normally in the windward direction, and the rear edges are in the downwind direction. Points A and B on Figure 1 and Figure 2 are tangent points of natural wind at the rotator of the wind turbine, the lift direction of the blades at windward semi-circle on the AB line is at the left side of the windward direction of the blades, and the lift direction of the blades at downwind semi-circle on the AB line is at the right side of the windward direction of the blades. Dynamic conditions of the blades are automatically controlled by a controllable device via a computer as needed, as shown in Figure 1 and Figure 2. The groove on the base is loaded with water, the lower part of the rotator, as shown at cross section of the floater in Figure 3, goes deep into the water, and the upper part thereof floats on the water. The schematic diagram of wind blades in Figure 3 is only the schematic diagram of a single blade, in fact, multi-layer several blades are installed according to the radius of the wind turbine, angles of attack and lift direction of each blade installed on the wind turbine can be automatically controlled by a controllable device via a computer according to the momentary wind force on the blade, all blades of the wind turbine only do negative work at one or two positions where the wind direction is consistent with ring tangent, and can do positive work or negative work on the wind turbine as needed at other positions. If such vertical axis wind turbines with controllable output power are reasonably arranged in some areas at mid-high latitude of the earth where a ground torrential zone at the ground boundary layer exists, to collect the wind energy from ground and latitude both within a radius or a distance of hundreds of meters to kilometers. Therefore the millions of kilowatts of high quality electric energy with stable AC frequency and automatically controlled output power as current thermal power generation units based on the need of power grid load.

### Description of Further Embodiment

Embodiments, a vertical axis wind turbine with controllable output power can stably collect wind energy hundreds of meters or even kilometers above the ground with a radius of hundreds of meters and even thousands of meters. The blades installed on the wind turbine are of a double-sided lift type. The schematic diagram of wind blades in Figure 3 is only the schematic diagram of a single blade, the angle of attack and lift direction of any of the multi-layer blades installed on the wind turbine can be automatically controlled by a controllable device via a computer according to the momentary wind force on the blade. All blades of the wind turbine only do negative work at one or two positions where the wind direction is consistent with ring tangent, and can do positive work or negative work on the wind turbine as needed at other positions. If such vertical axis wind turbines with controllable output power are reasonably arranged in some areas at mid-high latitude of the earth where a ground torrential zone at the ground boundary layer exists, to collect the wind energy from ground and latitude both within a radius or a distance of hundreds of meters to kilometers. Therefore the millions of kilowatts of high quality electric energy with stable AC frequency and automatically controlled output power as current thermal power generation units based on the need of power grid load.

## Claims

1. A vertical axis wind turbine with controllable output power, comprising a wind turbine base and an integrated shaftless annular three dimensional framework (2) in rigid connection with an annular floater (3) to support blades, wherein the blades are installed on the three dimensional framework, and angles of attack of the blades are controlled by a controllable device via a computer; wherein the wind turbine base is provided with an annular groove with water; the annular floater in rigid connection with the three dimensional framework to support the blades is a bottom structure of a rotator of the wind turbine, and the shape of the annular floater is in movable fit with an inner cavity of the annular groove; the angles of attack and lift direction of the blades installed on the wind turbine can be automatically controlled by the controllable device via the computer as needed according to the momentary wind force on the blades; the blades of the wind turbine are of a double-sided lift type; the lift-type blades are of airfoil profile like those of an airplane wing, and front edges thereof are normally in the windward direction, and rear edges are in the downwind direction.

2. The vertical axis wind turbine with controllable output power according to claim 1, **characterized in that** the wind turbine base is provided with an annular groove with water, the annular floater is the bottom structure of the rotator of the wind turbine, and the rotator floats on the water in the groove, the outer margin of rotator plays a role as a bearer for output of energy.

3. The vertical axis wind turbine with controllable output power according to claim 1, **characterized in that** the blades of the wind turbine are of a double-sided lift type.

4. The vertical axis wind turbine with controllable output power according to claim 1, **characterized in that** the lift-type blades are of airfoil profile like those of an airplane wing, and the front edges thereof are normally in the windward direction, and the rear edges are in the downwind direction.

5. The vertical axis wind turbine with controllable output power according to claim 1, **characterized in that** angles of attack and lift direction of the blades installed on the wind turbine can be controlled by the controllable device via the computer as needed according to the momentary wind force on the blades.

6. The vertical axis wind turbine with controllable output power according to claim 1, **characterized in that** all blades of the wind turbine only do negative work at one or two positions where the wind direction is consistent with ring tangent, and can do positive work or negative work on the wind turbine as needed at other positions.

7. The vertical axis wind turbine with controllable output power according to claim 1, **characterized in that** angles of attack and lift direction of the blades can be automatically controlled by the controllable device via the computer to enable the wind turbine to rotate at a relatively stable angular velocity, and control output power thereof based on the need of power grid load within the maximum output power.

8. The vertical axis wind turbine with controllable output power according to claim 1, **characterized in that** the wind turbine can be braked by changing the angles of attack and the lift direction of the blades under the control of the controllable device via the computer.

## Patentansprüche

1. Vertikalachsige Windturbine mit steuerbarer Ausgangsleistung, umfassend eine Windturbinenbasis und ein integriertes wellenloses ringförmiges dreidimensionales Gerüst (2) in starrer Verbindung mit einem ringförmigen Schwimmer (3) zum Tragen von Blättern, wobei die Blätter auf dem dreidimensionalen Gerüst installiert sind und die Anstellwinkel der Blätter durch eine Steuervorrichtung über einen Computer gesteuert werden; wobei die Windturbinenbasis mit einer Ringnut mit Wasser versehen ist; der ringförmige Schwimmer in starrer Verbindung mit dem dreidimensionalen Rahmen zur Abstützung der Blätter eine Basisstruktur eines Rotors der Windturbine ist, und die Form des ringförmigen Schwimmers in beweglichem Sitz mit einem inneren Hohlraum der Ringnut ist; die Anstellwinkel und die Auftriebsrichtung der an der Windturbine installierten Blätter können von der Steuervorrichtung über den Computer nach Bedarf entsprechend der momentanen Windstärke an den Blättern automatisch gesteuert werden; die Blätter der Windturbine sind doppelseitig auftriebsartig; die auftriebsartigen Blätter haben ein Profil wie die der Flugzeugflügel, und die Vorderkanten davon sind normalerweise in Windrichtung und die Hinterkanten sind in Abwindrichtung.

2. Vertikalachsige Windturbine mit steuerbarer Ausgangsleistung nach Anspruch 1, **dadurch gekennzeichnet, dass** der Windturbinenbasis mit einer Ringnut mit Wasser versehen ist, der Ringschwimmer die Basisstruktur des Rotors der Windturbine ist und der Rotator auf dem Wasser in der Nut schwimmt, wobei der äußere Rand des Rotors eine Rolle als Träger für die Energieabgabe spielt.

3. Vertikalachsige Windturbine mit steuerbarer Ausgangsleistung nach Anspruch 1, **dadurch gekennzeichnet, dass** die Blätter der Windturbine doppelseitig auftriebsartig sind.

4. Vertikalachsige Windturbine mit steuerbarer Ausgangsleistung nach Anspruch 1, **dadurch gekennzeichnet, dass** die Auftriebsschaufeln ein Schaufelprofil wie die des Flugzeugflügeln aufweisen und deren Vorderkanten normalerweise in Luvrichtung liegen, und die die Hinterkanten sind in Abwlndrichtung/Lehrichtung.

5. Vertikalachsige Windturbine mit steuerbarer Ausgangsleistung nach Anspruch 1, **dadurch gekennzeichnet, dass** Anstellwinkel und Auftriebsrichtung der auf der Windturbine installierten Blätter durch die Steuervorrichtung über den Rechner nach Bedarf entsprechend der momentanen Windstärke auf den Blättern gesteuert werden können.

6. Vertikalachsige Windturbine mit steuerbarer Ausgangsleistung nach Anspruch 1, **dadurch gekennzeichnet, dass** alle Blätter der Windturbine nur an einer oder zwei Stellen, an denen die Windrichtung mit der Ringtangente übereinstimmt, negativ arbeiten und an anderen Stellen je nach Bedarf positive oder negative Arbeiten an der Windturbine ausführen können.

7. Vertikalachsige Windturbine mit steuerbarer Ausgangsleistung nach Anspruch 1, **dadurch gekennzeichnet, dass** Anstellwinkel und Auftriebsrichtung der Blätter durch die Steuervorrichtung über den Computer automatisch gesteuert werden können, um die Windturbine mit einer relativ stabilen Winkelgeschwindigkeit drehen zu lassen, und um deren Ausgangsleistung auf der Grundlage des Bedarfs an Netzlast innerhalb der maximalen Ausgangsleistung zu steuern.

8. Vertikalachsige Windturbine mit steuerbarer Ausgangsleistung nach Anspruch 1, **dadurch gekennzeichnet, dass** die Windturbine durch Änderung der Anstellwinkel und der Auftriebsrichtung der Blätter unter der Steuerung der Steuervorrichtung über den Rechner bremsbar ist.

## Revendications

1. Une éolienne à axe vertical avec une puissance de sortie contrôlable, comprenant une base d'éolienne et une structure tridimensionnelle annulaire sans arbre intégrée en connexion rigide avec un flotteur annulaire (3) pour supporter des pales, dans laquelle les pales sont installées sur la structure tridimensionnelle, et les angles d'attaque des pales sont contrôlées par un dispositif contrôlable par ordinateur, dans lequel la base d'éolienne est munie d'une rainure annulaire avec de l'eau; le flotteur annulaire en connexion rigide avec la structure tridimensionnelle pour supporter les pales est une structure inférieure d'un rotateur de l'éolienne, et la forme du flotteur annulaire est en ajustement mobile avec une cavité intérieure de la rainure annulaire; les angles d'attaque et de direction de levage des pales installées sur l'éolienne peuvent être automatiquement commandés par le dispositif contrôlable par ordinateur, selon les besoins, en fonction de la force de vent momentanée sur les pales; les pales de l'éolienne sont du type à sustentation à double face; les pales de type à sustentation ont un profil aérodynamique semblable à celui d'une aile d'avion et leurs bords avant sont normalement orientés au vent, et les bords arrière sont dans le sens du vent.

2. L'éolienne à axe vertical à puissance de sortie réglable selon la revendication 1, **caractérisée en ce que** la base de l'éolienne est munie d'une rainure annulaire avec de l'eau, le flotteur annulaire est la structure inférieure du rotateur de l'éolienne et le rotateur flotte sur l'eau dans la rainure, la marge extérieure du rotateur joue un rôle de support pour la production d'énergie.

3. L'éolienne à axe vertical à puissance de sortie réglable selon la revendication 1, **caractérisée en ce que** les pales de l'éolienne sont du type à sustentation à double face.

4. L'éolienne à axe vertical à puissance de sortie réglable selon la revendication 1, **caractérisée en ce que** les pales de type à sustentation ont un profil aérodynamique semblable à celui d'une aile d'avion et leurs bords avant sont normalement orientés au vent et les bords arrière sont dans le sens du vent.

5. L'éolienne à axe vertical à puissance de sortie contrôlable selon la revendication 1, **caractérisée en ce que** les angles d'attaque et de direction de levage des pales Installées sur l'éolienne peuvent être contrôlés par le dispositif contrôlable par ordinateur en fonction de la force de vent momentanée sur les pales.

6. L'éolienne à axe vertical à puissance de sortie réglable selon la revendication 1, **caractérisée en ce que** toutes les pales de l'éolienne effectuent un travail négatif dans une ou deux positions où la direction du vent est cohérente avec la tangente de l'anneau et peut effectuer un travail positif ou négatif sur l'éolienne au besoin à d'autres positions.

7. L'éolienne à axe vertical à puissance de sortie contrôlable selon la revendication 1, **caractérisée en ce que** les angles d'attaque et de direction des pales peuvent être commandés automatiquement par le dispositif de commande par ordinateur pour permettre à l'éolienne de tourner à une vitesse angulaire relativement stable, et en contrôler la puissance de sortie en fonction de la nécessité de la charge du réseau électrique dans la puissance de sortie maximale.

8. L'éolienne à axe vertical à puissance de sortie contrôlable selon la revendication 1, **caractérisée en ce que** l'éolienne peut être freinée en modifiant les angles d'attaque et la direction de sustentation des pales sous le contrôle du dispositif contrôlable par ordinateur.
